# EUROPEAN PATENT APPLICATION

(11) **EP 1 923 776 A2**
(43) Date of publication of application: **21.05.2008**
(21) Application number: 07120974.6
(22) Date of filing: 19.11.2007
(51) Int. Cl.: G06F 3/042

(54) **Touch screen using image sensor**

(30) Priority: 20.11.2006 KR 20060114461
(71) Applicant: Samsung Electronics Co., Ltd., Suwon-si, Gyeonggi-Do (KR)
(72) Inventor: Yu, Hyun-Ho, Gyeonggi-do (KR); Yoon, Young-Kwon, Gyeonggi-do (KR); Shin, Dong-Sung, Gyeonggi-do (KR); Lee, Yu-Sheop, Gyeonggi-do (KR); Choi, Yong-Hwan, Gyeonggi-do (KR); Pyo, Sun-Hyoung, Gyeonggi-do (KR)
(74) Representative: Grünecker, Kinkeldey, Stockmair & Schwanhäusser Anwaltssozietät

(57) **Abstract**

A touch screen includes a touch panel providing an image for a user's information input, including a first image sensor, which is arranged at a side or disposed in a side of the touch panel for detecting an input position of the user using an image. A first lens system forms a plurality of pixel regions on an image pickup surface of the first image sensor and having a plurality of lenses, each lens for forming an image of an input member of the user, which is located within a corresponding angle of view, in a corresponding pixel region. An optional second lens system, arranged at another side of the touch panel, typically substantially perpendicular to the first lens system also detects an image of the input member.

## Description

### BACKGROUND OF THE INVENTION

### 1. Field of the Invention

The present invention relates generally to a touch screen that may serve as an interface for a variety of devices. More particularly, the present invention relates to a contactless touch screen.

### 2. Description of the Related Art

Conventional touch screens include a touch panel providing an image for a user's information input, and a sensor for detecting an input position of the screen that has been touched by user, typically by pressing against the selected portion of the screen with their finger or a stylus. Such touch screens have been increasingly used as an interface for portable wireless terminals, such as cellular phones, Personal Digital Assistants (PDAs), and at retail stores for customers to touch the screen to enter their personal identification code (PIN) when making a purchase with an electronic debit card.

Conventional touch screens detect an input position of a user by one of a resistance detecting method, a capacitance detecting method, an ultrasonic detecting method, and an infrared detecting method.

The resistance detecting method is a method which provides for the isolation of upper and lower plates from each other, and an Indium Tin Oxide (ITO) thin film is layered between the upper and lower plates, along with a plurality of dot spacers. According to the resistance method, a contact position between the upper and lower plates is detected when a user pushes the upper plate.

According to the capacitance detecting method, which provides for layering an ITO thin film and an isolation layer on the upper and lower surfaces of a substrate, a uniform current is applied to the ITO thin film on the upper substrate surface, and a change in the current is detected when a user pushes the isolation layer on the upper surface to identify the position of the screen pushed/pressed by the user.

According to the ultrasonic detecting method, which includes forming ultrasonic gratings on a touch panel using ultrasonic converters and reflectors, an ultrasonic blocked position is detected by sensors when a user pushes the touch panel to identify the position of the screen pushed/pressed by the user.

According to the infrared detecting method, which includes forming infrared gratings on a touch panel using Light Emitting Diodes (LEDs) and reflectors, an infrared blocked position is detected by sensors when a user pushes the touch panel to identify the position of the screen pushed/pressed by the user.

However, the touch screens using the conventional methods described above have the following problems.

First, with regard to the resistance detecting method, as touch screens must employ the ITO thin films, a transmittance and an optical characteristic of light for displaying an image are lowered, and because physical contact is necessary to detect a user selection, a malfunction is easy to occur due to a surface damage, and durability decreases.

Second, with regard to the capacitance detecting method, as the touch screen operates by having sensor that sense only conductors having conductivity, a globe, plastic stylus, or a ballpoint pen having non-conductivity cannot be sensed.

Third, with regard to the ultrasonic detecting method, or the infrared detecting method, the manufacturing costs are significantly greater than the other methods, which have inhibited their use, particularly in devices that are relatively inexpensive.

### SUMMARY OF THE INVENTION

The present invention provides, in part, a solution to at least some of the above problems and/or disadvantages and to provide at least the advantages below. Accordingly, one of the many aspects of the present invention is to provide a contactless touch screen having low manufacturing costs and/or improved durability than known heretofore.

According to one exemplary aspect of the present invention, there is provided a touch screen including a touch panel providing an image for a user's information input; a first image sensor, which is arranged on one side of the touch panel and detects an input position of the user using an image; and a first lens system forming a plurality of pixel regions on an image pickup surface of the first image sensor and having a plurality of lenses, with each lens for forming an image of an input member of the user, which is located within a corresponding angle of view, in a corresponding pixel region.

### BRIEF DESCRIPTION OF THE DRAWINGS

The above and other exemplary objects, features and advantages of the present invention will become more apparent from the following detailed description when taken in conjunction with the accompanying drawing in which:
FIG 1 is an illustration showing the arrangement and operation of certain components when detecting a position of an object using an image in a touch screen according to an exemplary embodiment of the present invention;
FIG. 2 shows a plan view, a front view, and a side view of a touch screen according to an exemplary embodiment of the present invention;
FIGs. 3, 4A and 4B are exemplary drawings illustrating an example of detecting an X-axis position of an input member of the touch screen illustrated in FIG. 2 using an image; and
FIGs. 5, 6A and 6B are exemplary drawings illustrating an example of detecting a Y-axis position of the input member of the touch screen illustrated in FIG. 2 using an image.

### DETAILED DESCRIPTION OF THE INVENTION

Now, exemplary embodiments of the present invention will be described herein below with reference to the accompanying drawings. For the purposes of clarity and simplicity, well-known functions or constructions may not be described in detail when such well-known functions or construction would obscure appreciation of the invention. A person of ordinary skill in the art understands and appreciates that the drawings and accompanying description are provided for explanatory purposes, and the claimed invention is not limited to the examples shown and discussed herein.

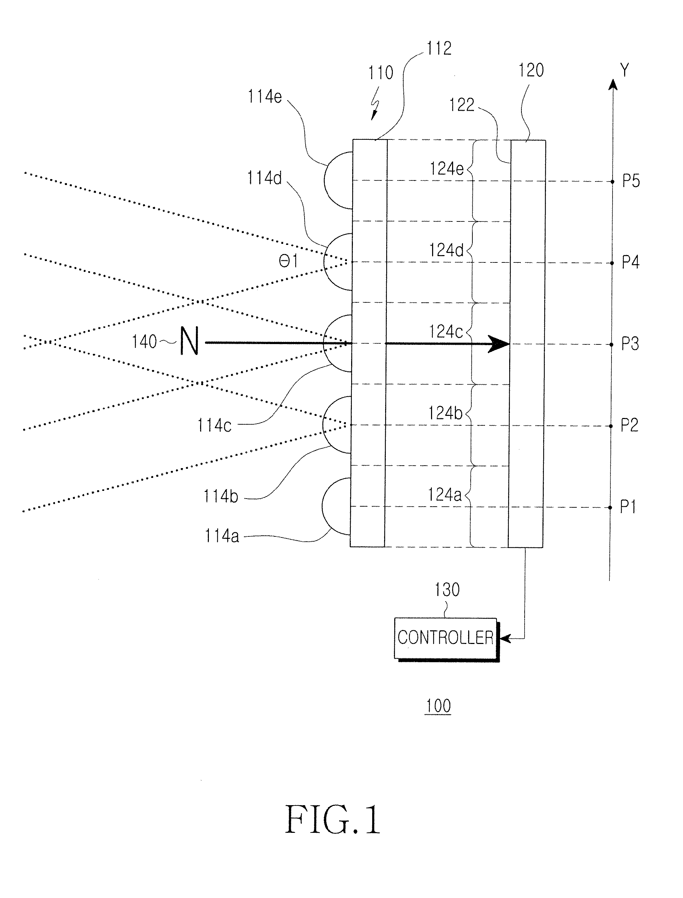

FIG. 1 is an illustration showing the arrangement and operation of certain components when detecting a position of an object using an image in a touch screen according to an exemplary embodiment of the present invention. FIG. 1 shows an object 140 in the form of 'N' and a touch screen 100 including a lens system 110, an image sensor 120, and a controller 130.

According to this particular example, the object 140 is arranged in a third position P3 of a Y-axis (the Y-axis being shown on the right side of the drawing).

Still referring to FIG. 1, the lens system 110 has a front surface facing the object 140 and includes a substrate 112 typically arranged in the form of a rectangular flat board, and a plurality of micro lenses 114a through 114e protrude from the front surface of the substrate 112. The plurality of micro lenses 114a through 114e are typically of the same size, form, and angle of view θ1, and if a total or portion of the object 140 is located within the angle of view θ1 of any of the plurality of micro lenses 114a through 114e, the micro lens forms an image of the total or portion of the object 140 on an image pickup surface 122 of the image sensor 120.

The lens system 110 is preferably made of a material transparent with respect to a visible ray as a whole, and can be produced, for example, by injection molding a single glass material or attaching a plurality of micro lenses on a glass flat board. The protruded lens surface of each of the plurality of micro lenses 114a through 114e can be spherical or aspherical.

The image sensor 120 comprises said image pickup surface 122 arranged to face a rear surface of the substrate 112, and a plurality of pixel regions 124a through 124e, which respectively correspond to the plurality of micro lenses 114a through 114e, are formed on the image pickup surface 122. The image sensor 120 detects images formed on the image pickup surface 122 and typically outputs an image signal indicating information about the images to the controller 130. The image sensor 120 typically can be implemented by, for example, a Charge-Coupled Device (CCD), a Complementary Metal-Oxide Semiconductor (CMOS), etc.

Still referring to FIG. 1, the controller 130 receives the image signal from the image sensor 120 and determines a position of the object 140 from the information about the images received by one or more image sensors.

As illustrated in the example shown in FIG. 1, the lens system 110 includes the first through fifth micro lenses 114a through 114e disposed in a row along the Y-axis with the same interval, and the first through fifth pixel regions 124a through 124e, which respectively corresponding to the first through fifth micro lenses 114a through 114e, are formed on the image pickup surface 122 of the image sensor 120.

In this particular example, the object 140 is located within an angle of view of the third micro lens 114c without being located within angles of view of the other micro lenses 114a, 114b, 114d, and 114e. The third micro lens 114c forms an image of the object 140 in the third pixel region 124c, and the image sensor 120 detects the image formed on the image pickup surface 122.The controller 130 receives an image signal indicating information about the image from the image sensor 120. The controller 130 determines that the object 140 is arranged in a position corresponding to the third micro lens 114c, i.e. the third position P3 of the Y-axis, by analyzing that the image of the object 140 exists in only the third pixel region 124c.

As another non-limiting example, a case where a total of the object 140 is located within the angle of view of the third micro lens 114c and portions of the object 140 are located within the angles of view of the second and fourth micro lenses 114b and 114d will now be described.

In this example, the third micro lens 114c forms an image of the object 140 in the third pixel region 124c, and the second and fourth micro lenses 114b and 114d respectively form images of portions of the object 140 in the second and fourth pixel regions 124b and 124d. The image sensor 120 detects the images formed on the image pickup surface 122, and the controller 130 receives an image signal indicating information about the images from the image sensor 120. The controller 130 determines that the object 140 is arranged in a position corresponding to the third micro lens 114c, i.e. the third position P3 of the Y-axis, by analyzing that the image in the third pixel region 124c is located in the center of the third pixel region 124c and the images in the second and fourth pixel regions 124b and 124d are respectively located in the side areas of the second and fourth pixel regions 124b and 124d, adjacent to third pixel region 124c.

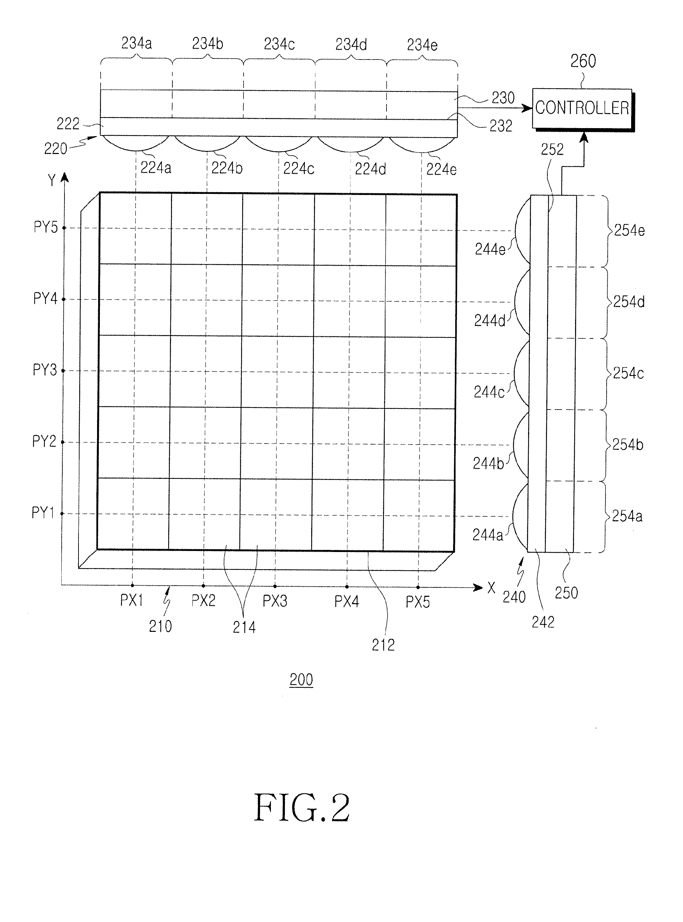

FIG 2 shows a plan view, a front view, and a side view of a touch screen 200 according to another exemplary embodiment of the present invention. Referring to FIG. 2, the touch screen 200 includes a touch panel 210, respective first and second lens systems 220 and 240, respective first and second image sensors 230 and 250, and a controller 260.

Still referring to FIG 2, the touch panel 210 typically has the form of rectangular flat board and displays an image for a user's information input by means of a screen 212, wherein a plurality of touch regions 214 indicating pre-set input positions of the user are formed on the screen 212. In the current exemplary embodiment, the screen 212 is divided into the plurality of touch regions 214 having a 5×5-matrix structure, however the touch regions may be any number as desired, and does not have to be square. Hereinafter, a touch region 214 of the touch screen 210 is typically arranged in a position P of an X-axis and a position Q of a Y-axis is indicated by a {P, Q} touch region 214. The first lens system 220 and the first image sensor 230 are typically disposed in the upper side of the touch panel 210 in order to detect an X-axis position of an input member of the user. The input member may be a finger (or a fingertip of the finger) of the user or a touch pen (or a tip of the touch pen), included but not limited to a stylus.

The first lens system 220 is typically disposed in the upper side of the touch panel 210, so that the front surface of the first lens system 220 is substantially perpendicular to the Y-axis (in other words, the front surface of the first lens system 220 is substantially perpendicular to a column direction of the plurality of touch regions 214), and includes a substrate 222 in the form of rectangular flat board and (1-1)^{th} through (1-5)^{th} micro lenses 224a through 224e protrude from the front surface of the substrate 222. The (1-1)^{th} through (1-5)^{th} micro lenses 224a through 224e typically have the same size, form, and angle of view and are disposed in a row substantially parallel to the X-axis. If a total or a portion of the input member is located within the angle of view of any of the (1-1)^{th} through (1-5)^{th} micro lenses 224a through 224e, the micro lens forms an image of the total or portion of the input member (typically for example, a finger tip of the finger of the user or a touch pen (or a tip of the touch pen)) on an image pickup surface 232 of the first image sensor 230.

The first image sensor 230 has the image pickup surface 232 disposed to face the rear surface of the substrate 222 of the first lens system 220, and (1-1)^{th} through (1-5)^{th} pixel regions 234a through 234e respectively corresponding to the (1-1)^{th} through (1-5)^{th} micro lenses 224a through 224e of the first lens system 220 are formed on the image pickup surface 232. The first image sensor 230 detects images formed on the image pickup surface 232 and outputs a first image signal indicating information about the images to the controller 260.

The controller 260 receives the first image signal from the first image sensor 230 and determines the X-axis position of the input member from the information about the images.

Still referring to FIG 2, the second lens system 240 and the second image sensor 250 are typically disposed in the right side of the touch panel 210 (from the view direction) in order to detect a Y-axis position of the input member of the user.

The second lens system 240 is typically disposed in the right side of the touch panel 210 so that the front surface of the second lens system 240 is substantially perpendicular to the X-axis (in other words, the front surface of the second lens system 240 is substantially perpendicular to a row direction of the plurality of touch regions 214), and includes a substrate 242 in the form of rectangular flat board and (2-1)^{th} through (2-5)^{th} micro lenses 244a through 244e protruded from the front surface of the substrate 242. The (2-1)^{th} through (2-5)^{th} micro lenses 244a through 244e have the same size, form, and angle of view and are disposed in a row in parallel to the Y-axis. If a total or a portion of the input member is located within the angle of view of any of the (2-1)^{th} through (2-5)^{th} micro lenses 244a through 244e, the micro lens forms an image of the total or portion of the input member on an image pickup surface 252 of the second image sensor 250. A person of ordinary skill in the understands and appreciates that terms such as right side, left side, front, rear, etc., are a matter of convention, and according to the present invention, the arrangement of the lens systems, etc., can different than shown and described.

The second image sensor 250 typically has the image pickup surface 252 disposed to face the rear surface of the substrate 242 of the second lens system 240, and (2-1)^{th} through (2-5)^{th} pixel regions 254a through 254e respectively corresponding to the (2-1)^{th} through (2-5)^{th} micro lenses 244a through 244e of the second lens system 240, which are formed on the image pickup surface 252. The second image sensor 250 detects images formed on the image pickup surface 252 and outputs a second image signal indicating information on the images to the controller 260.

The controller 260 receives the second image signal from the second image sensor 250 and determines the Y-axis position of the input member from the information about the images.

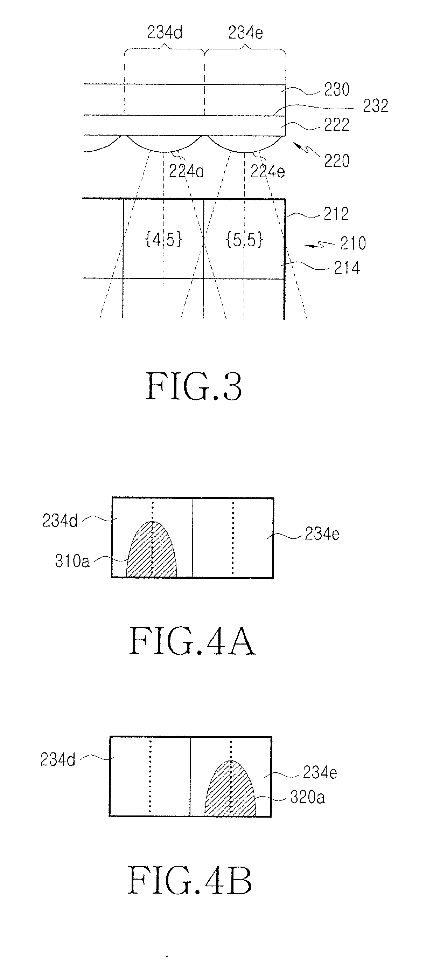

FIGs. 3 to 4B are drawings provided for explanatory purposes regarding one way according to the present invention for detecting an X-axis position of the input member on the touch screen 200 illustrated in FIG. 2 using an image. FIG. 3 shows a portion of the touch screen 200. FIG. 4A shows a portion of the image pickup surface 232 of the first image sensor 230 when the input member is located in a {4, 5} touch region 214, and FIG 4B shows a portion of the image pickup surface 232 of the first image sensor 230 when the input member is located in a {5, 5} touch region 214.

Now referring to FIGs. 3 and 4A, a total portion of the input member is located within only the angle of view of the (1-4)^{th} micro lens 224d without being located the angles of view of the other micro lenses 224a, 224b, 224c, and 224e of the first lens system 220. Thus, an image 310a of the input member exists in only the (1-4)^{th} pixel region 234d excluding the other pixel regions 234a, 234b, 234c, and 234e of the first image sensor 230. Accordingly, the controller 260 determines that the input member exists in a position of {4, not determined}.

Referring to FIGs. 3 and 4B, a total portion of the input member is located within only the angle of view of the (1-5)^{th} micro lens 224e without being located the angles of view of the other micro lenses 224a, 224b, 224c, and 224d of the first lens system 220. Thus, an image 320a of the input member exists in only the (1-5)^{th} pixel region 234e excluding the other pixel regions 234a, 234b, 234c, and 234d of the first image sensor 230. Accordingly, the controller 260 determines that the input member exists in a position of {5, not determined}.

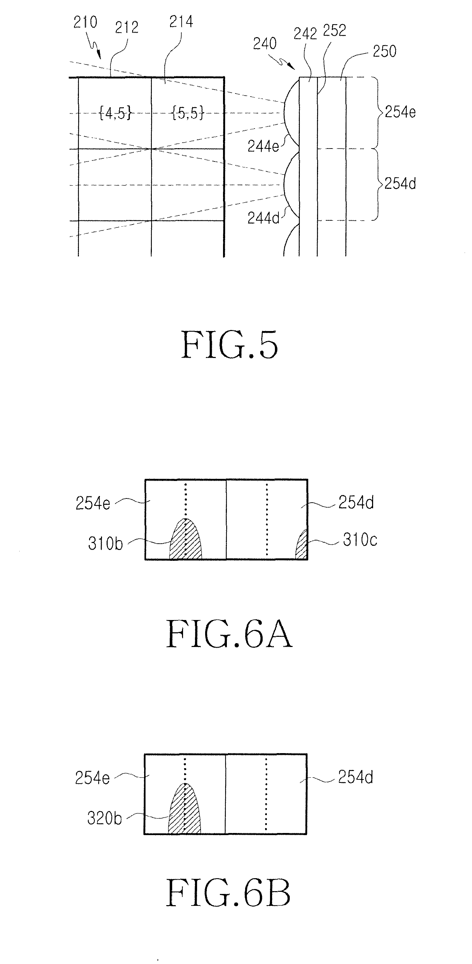

FIGs. 5 to 6B are drawings for showing an example of detecting a Y-axis position of the input member of the touch screen 200 illustrated in FIG. 2 using an image. FIG. 5 shows a portion of the touch screen 200. FIG. 6A shows a portion of the image pickup surface 252 of the second image sensor 250 when the input member is located in the {4, 5} touch region 214, and FIG 6B shows a portion of the image pickup surface 252 of the second image sensor 250 when the input member is located in the {5, 5} touch region 214.

Referring to FIGs. 5 and 6A, the input member is only located within the angles of view of the (2-4)^{th} and (2-5)^{th} micro lenses 244d and 244e without being located within the angles of view of the other micro lenses 244a, 244b and 244c of the second lens system 240. Thus, images of the input member only exist in the (2-4)^{th} and (2-5)^{th} pixel regions 254d and 254e excluding the other pixel regions 254a, 254b, and 254c of the second image sensor 250. In this example, the image 310b in the (2-5)^{th} pixel region 254e is located in the center of the (2-5)^{th} pixel region 254e, and the image 310c in the (2-4)^{th} pixel region 254d is located in the side of the (2-4)^{th} pixel region 254d.

As described above, according to an exemplary embodiment of the present invention, when the input member is located within angles of view of a plurality of micro lenses, the controller 260 selects a pixel region in the center of which an image of the input member is located. As described above, since the controller 260 has already determined that the input member exists in the position of {4, not determined}, the controller 260 then finally determines that input member exists in a position of {4, 5}.

Referring to FIGs. 5 and 6B, the input member is located within only the angle of view of the (2-5)^{th} micro lens 244e without being located within the angles of view of the other micro lens 244a, 244b 244c, and 244d of the second lens system 240. Thus, an image 320b of the input member exists in only the (2-5)^{th} pixel region 254e excluding the other pixel regions 254a, 254b, 254c, and 254d of the second image sensor 250. As described above, since the controller 260 has already determined that the input member exists in the position of {5, not determined}, the controller 260 finally determines that input member exists in a position of {5, 5}.

As shown and described in the examples above, according to the present invention, as a position of an input member is detected based on image signals of image sensors, the surface of a touch screen does not have to be pressed, and thus, the time delay and operational problems can be reduced, and durability increased as compared to a conventional contact touch screen, resulting in a simpler and faster information input.

In addition, unlike a conventional touch screen in the ultrasonic or infrared detecting method, which needs a number of transducers or light sources, reflectors, and sensors, since only a relatively small number of sensors and cheaper lens systems are needed, a manufacturing cost is reduced.

While the invention has been shown and described with reference to a certain preferred exemplary embodiments thereof, it will be understood by those skilled in the art that various changes in form and details may be made therein without departing from the scope of the appended claims. For example, the rectangular flat board could take the shape of any type of polygon as desired, but preferably has a substantially flat surface. Also, while it is preferred that the image sensors are disposed in the touch panel, they may be adjacent to the touch panel, partially disposed in the touch panel, etc.

## Claims

1. A touch screen (100,200) comprising:
a touch panel (210) providing an image for a user's information input;
a first image sensor (120,230), which is arranged to detect an input position of the user by detecting an image; and
a first lens system (110,220) forming a plurality of pixel regions (124a-e, 234a-e) on an image pickup surface (122,232) of the first image sensor and having a plurality of lenses (114a-e, 224a-e), each lens for forming an image of an input member of the user, which is located within a corresponding angle of view, in a corresponding pixel region.

2. The touch screen of claim 1, wherein the first image sensor (120,230) is disposed along one side of the touch panel.

3. The touch screen of claim 1 or 2, wherein the first image sensor (120,230) is adjacent to one side of the touch panel.

4. The touch screen of claim 1, further comprising a controller (130,260) adapted to determine a position of the input member by determining a pixel region, in the center of which the image of the input member is formed, from among the plurality of pixel regions.

5. The touch screen of claim 1, further comprising:
a second image sensor (250), which is arranged substantially perpendicular to the first image sensor (230) for detecting the input position of the user using an image; and
a second lens system (240) forming a plurality of pixel regions (254a-e) on an image pickup surface (252) of the second image sensor and having a plurality of lenses (244a-e), each lens for forming an image of the input member of the user, which is located within a corresponding angle of view, in a corresponding pixel region.

6. The touch screen of claim 5, wherein the second image sensor is disposed along another side of the touch panel (210).

7. The touch screen of claim 5, wherein the second image sensor is adjacent to another side of the touch panel.

8. The touch screen of one of claims 5 to 7, further comprising a controller (260) adapted to determine a position of the input member by determining pixel regions, in the center of which the images of the input member are formed, from among the pixel regions of the first and second image sensors (230,250).

9. The touch screen of one of the previous claims, wherein at least a portion of the image of the input member is detected in more than one of the plurality of pixel regions.

10. The touch screen of claim 1 or 5, wherein the plurality of lenses of the lens systems comprise micro lenses that are spherical.

11. The touch screen of claim 1 or 5, wherein the plurality of lenses of the lens systems comprise micro lenses that are aspherical.

12. The touch screen of claim 1 or 5, wherein the lens systems further comprise a substrate, and the plurality of lenses protrude from a front surface of the substrate.

13. The touch screen of claim 8, wherein the controller (230) receives a first image signal from the first image sensor (230) and determines an X-axis position of the input member from the information about the images formed on the first image sensor, and a second image signal from the second image sensor (250) and determines a Y-axis position of the input member from the information about the images formed on the second image sensor
